# FASCICULE DE BREVET EUROPEEN

(11) **EP 0 395 590 B1**
(45) Date de publication et mention de la délivrance du brevet: **04.01.1995**
(21) Numéro de dépôt: 90810320.3
(22) Date de dépôt: 24.04.1990
(51) Int. Cl.: G05B 19/04, G06F 1/00

(54) **Dispositif électronique de commande d'au moins un récepteur électrique**
Elektronisches Steuergerät für mindestens einen elektrischen Empfänger
Electronic control device for at least one electrically driven receiver

(30) Priorité: 28.04.1989 FR 8905689
(43) Date de publication de la demande: 31.10.1990
(73) Titulaire: SOMFY, F-74300 Cluses (FR)
(72) Inventeur: Vignoli, Jean-Marc, F-74300 Cluses (FR); Truchon, Joel, Magland, F-74300 Cluses (FR); Jacquel, Dominique, Thyez, F-74300 Cluses (FR)
(74) Mandataire: Meylan, Robert Maurice

(56) Documents cités:
- EP-A- 0 027 432
- DE-A- 2 831 160
- GB-A- 2 072 902

## Description

La présente invention a pour objet un dispositif électronique de commande d'au moins un récepteur électrique, comprenant une unité logique de traitement prévue pour mémoriser des tâches à exécuter par le récepteur et alimentée, d'une part, par le secteur et, d'autre part, par une pile destinée à remplacer le secteur en cas de défaillance de celui-ci, et des moyens pour substituer l'alimentation de la pile à celle du secteur lorsque la tension du secteur descend en dessous d'un niveau déterminé, ces moyens comprenant des moyens détectant une chute de tension du secteur et des moyens de mise en circuit de la pile, l'unité logique de traitement comprenant un compteur de temps initialisé et décrémenté simultanément à l'envoi d'un ordre de mise en circuit de la pile et étant en outre prévue pour tester périodiquement les moyens de détection d'une chute de tension et délivrer un ordre en fin de décrémentation du compteur si la tension d'alimentation secteur n'est pas revenue à son niveau déterminé.

Un tel dispositif est connu du document GB-A-2 072 902. L'ordre donné en fin de décrémentation du compteur est un ordre de transfert de données d'une mémoire ROM dans une mémoire RAM, c'est-à-dire un ordre de sauvegarde.

Du document EP-A-0 027 432, on connaît en outre un dispositif de commande pour appareils électroménagers comprenant une unité logique de traitement dans laquelle sont mémorisés des programmes de travail et une pile auxiliaire branchée en permanence à l'unité logique à travers une diode de telle sorte que la pile débite lorsque la tension d'alimentation secteur est coupée accidentellement, de manière à permettre à l'unité logique de traitement de mémoriser l'état d'exécution d'un programme interrompu par la coupure accidentelle de l'alimentation secteur, l'unité logique étant prévue pour poursuivre l'exécution du programme interrompu lors du rétablissement de l'alimentation secteur.

Dans ces dispositifs, comme dans les autres dispositifs connus équipés d'une pile de secours, la pile, une fois mise en circuit, débite constamment tant que l'alimentation secteur n'est pas rétablie correctement. La pile débite donc même pendant les très longues interruptions prévisibles et sans conséquence pour l'utilisateur, telles que celles, par exemple, résultant du stockage de l'appareil contenant le dispositif en magasin, entre l'instant où il a été fabriqué et celui où il est utilisé, ou encore résultant d'une coupure volontaire de l'alimentation secteur par l'utilisateur en cas d'absence prolongée, comme cela se produit dans les résidences secondaires. Ceci a pour conséquence une usure relativement rapide et souvent inutile de la pile. Pour pallier cet inconvénient on a réalisé des dispositifs à pile amovible, mais ces dispositifs sont contraignants car ils nécessitent la mise en place de piles; ils sont peu pratiques car l'accessibilité du logement de la pile n'est pas toujours aisée; ils sont coûteux et encombrants car, afin de répondre aux normes de sécurité, ils doivent comporter des moyens permettant d'isoler les bornes des piles du secteur, tels qu'un interrupteur lié au couvercle du conteneur à pile ou nécessitent d'avoir une alimentation isolée du secteur.

On connaît également des dispositifs de commande utilisant des sources électriques rechargeables telles qu'accumulateurs (EP-A-0 027 432) ou surcapacités, mais les premiers sont également coûteux et les secondes ne permettent pas d'obtenir une capacité suffisante.

La présente invention a pour but de réaliser un dispositif de commande obviant aux inconvénients énumérés ci-dessus.

Le dispositif électronique de commande selon l'invention est caractérisé en ce que l'ordre délivré en fin de décrémentation du compteur est un ordre de mise hors circuit de la pile.

La pile assure donc le bon fonctionnement du dispositif de commande en cas d'interruption de courte ou moyenne durée de l'alimentation secteur, mais elle est mise hors circuit en cas d'interruption de longue durée. Elle peut donc remplir sa fonction beaucoup plus longtemps.

Dans un mode préféré d'exécution de l'invention, l'unité logique de traitement est en outre prévue, en cas de retour à la normale de l'alimentation secteur avant la fin de la décrémentation du compteur, pour délivrer un ordre de mise hors circuit de la pile et pour tester si les tâches mémorisées ont été affectées pendant l'insuffisance d'alimentation secteur et, dans la négative, faire exécuter les dernières tâches mémorisées qui auraient dues être exécutées pendant cette période ou, dans le cas contraire, mettre les mémoires dans un état neutre de non programmation.

Des formes d'exécution de l'invention seront décrites, à titre d'exemple, en relation avec le dessin annexé dans lequel :
La figure 1 est un schéma bloc d'une installation comportant un dispositif électronique de commande;
la figure 2 représente une première forme d'exécution du circuit du dispositif de commande;
la figure 3 représente le diagramme du programme d'interruption contenu dans la mémoire non volatile du microprocesseur constituant l'unité logique de traitement, dans cette première forme d'exécution;
la figure 4 représente une seconde forme d'exécution du circuit du dispositif de commande;
la figure 5 représente le diagramme du programme d'interruption contenu dans la mémoire non volatile du microprocesseur constituant une partie de l'unité logique dans la seconde forme d'exécution.

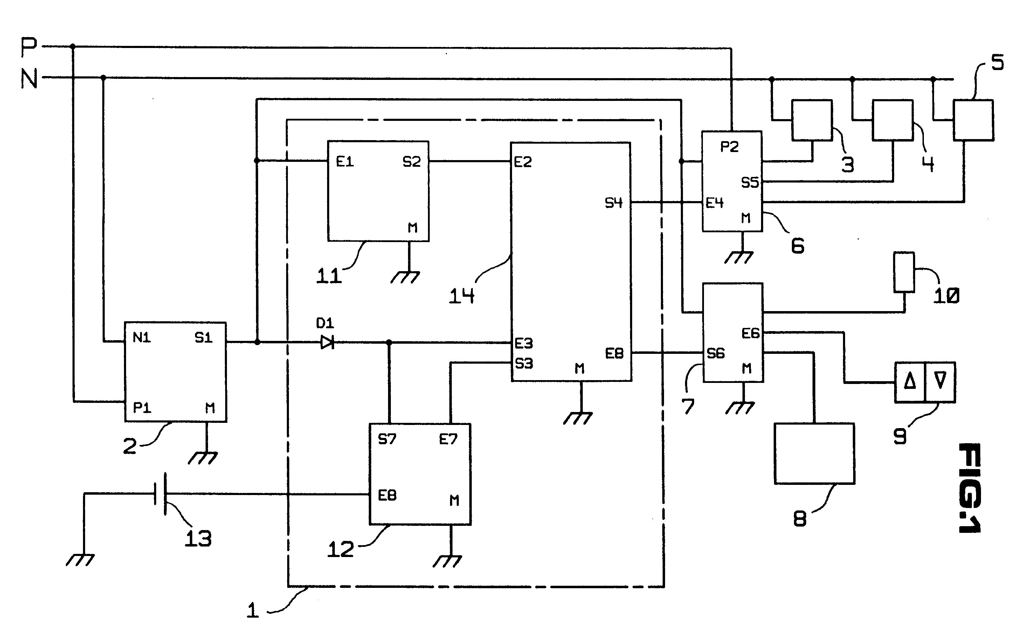

L'installation représentée à la figure 1 comprend un dispositif de commande électronique 1 alimenté par le secteur représenté par les deux conducteurs P et N à travers un circuit d'alimentation basse tension 2. L'installation comporte en outre un certain nombre de récepteurs 3, 4, 5, par exemple des moteurs électriques susceptibles d'accomplir une rotation dans chaque sens correspondant à une tâche montée et à la tâche inverse descente d'un volet roulant ou une gâche de serrure susceptible d'accomplir une seule tâche. Ces récepteurs sont commandés par le circuit de commande 1 à travers une interface de sortie 6. Une interface d'entrée 7 est branchée entre le circuit de commande 1 et un clavier de programmation 8 pour l'introduction de données dans le dispositif de commande, des moyens de commande manuels 9 et des moyens de commande automatiques 10. Le dispositif de commande 1 comprend un circuit détecteur de présence secteur 11 et un circuit 12 de mise en circuit d'une pile 13, ainsi qu'une unité logique de traitement 14. Le dispositif de commande comprend en outre une diode D1 destinée à isoler la pile 13 des circuits 2 et 11 lorsqu'elle débite à travers le transistors T4.

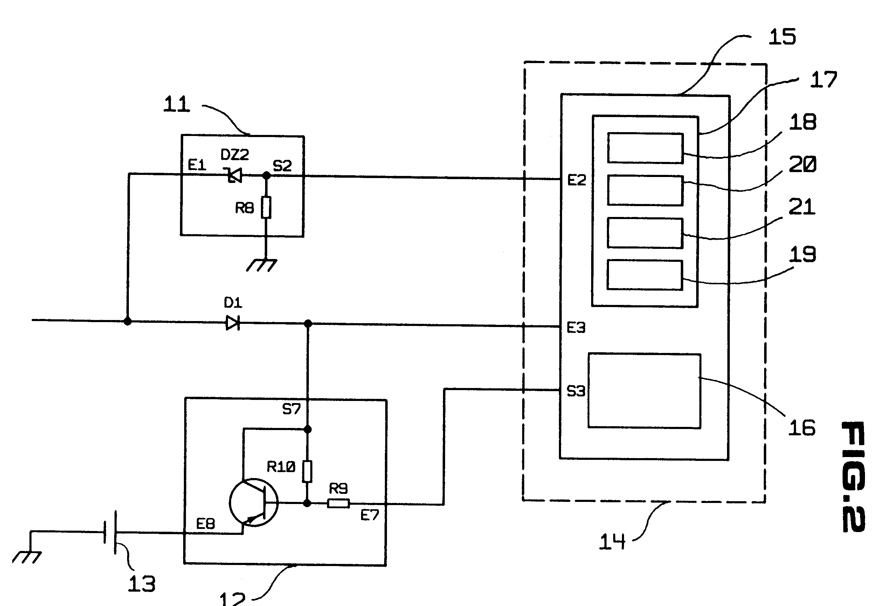

Selon une forme d'exécution représentée à la figure 2, le circuit 11 de détection de la présence de la tension secteur est constitué d'une diode ZENER DZ2 branchée entre l'alimentation 2 et l'unité logique de traitement et polarisée par une résistance R8.

Le circuit 12 de mise en circuit de la pile est constitué d'un transistor PNP T4, d'une résistance R9 fixant le courant émetteur-base du transistor et d'une résistance R10 entre la base et le collecteur assurant un passage rapide à 1 de la base du transistor lorsque la sortie S3 de l'unité logique de traitement 14 passe à l'état 1. L'émetteur du transistor T4 est relié à la pile 13, tandis que son collecteur est relié à la cathode de la diode D1.

L'unité logique de traitement 14 est constituée d'un microprocesseur 15 dont la mémoire non volatile 16 contient un programme courant, un programme d'interruption et une valeur d'initialisation de compteur. La mémoire volatile 17 du microprocesseur comporte une horloge 18, un compteur 19, des cases mémoires 20 pour contenir les heures auxquelles les tâches devront être exécutées, et des flags 21 pour contenir des états (0 ou 1) images des tâches qui seraient à exécuter si l'alimentation secteur revenait à l'instant présent. Il est prévu un flag par récepteur et par tâche.

Le programme courant comporte des instructions :
- de mise à 0 de la sortie S3 du microprocesseur;
- de scrutation des entrées (commandes manuelles, commandes automatiques);
- autorisant la programmation
   . de l'heure des tâches montée, descente,
   . de l'heure courante;
- d'incrémentation de l'heure courante (horloge);
- de comparaison de l'heure courante aux heures des tâches à exécuter;
- d'activation des sorties S4 de l'unité logique de traitement 14 (figure 1), c'est-à-dire du microprocesseur.

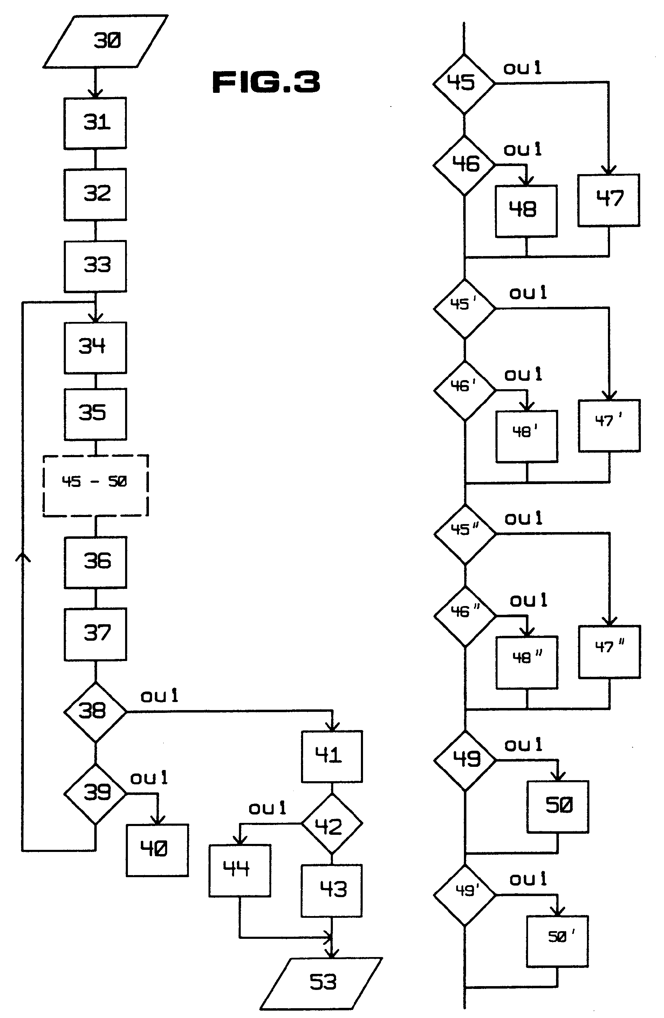

Le programme d'interruption, représenté à la figure 3, comporte les instructions suivantes : A partir de la détection 30 d'une chute de la tension d'alimentation secteur :
- 31.: Passage à 0 de la sortie S3;
- 32.: Initialisation du compteur 19 à la valeur mémorisée dans la mémoire non volatile 16;
- 33.: Mise à 0 des flags 21;
- 34.: Attente de temporisation;
- 35.: Incrémentation de l'horloge interne 18;
- 36.: Maintien en mémoire des tâches à exécuter;
- 37.: Décrémentation du compteur 19;
- 38.: Test du retour de l'alimentation secteur;
- 39.: Test de l'état 0 du compteur 19;
- 40.: Passage à 1 de la sortie S3;
- 41.: Passage à 1 de la sortie S3;
- 42.: Test de l'altération, pendant l'interruption de l'alimentation secteur, des tâches mémorisées;
- 43.: Lecture des flags 21 et exécution des ordres correspondants à l'état des flags;
- 44.: Retour des mémoires à leur état neutre (altération constatée);
- 45.: Test si l'heure courante est égale à une heure de programmation d'une tâche descente (cas d'un volet roulant);
- 46.: Test si l'heure courante est égale à une heure de programmation d'une tache montée;
- 47.: Mise à 1 du flag correspondant à la tâche descente et mise à 0 du flag correspondant à la tâche montée;
- 48.: Mise à 1 du flag correspondant à la tâche montée et mise à 0 du flag correspondant à la tâche descente.

Les instructions 45 à 48 concernent un récepteur, par exemple le récepteur 3 de la figure 1. Dans le cas où on a plusieurs récepteurs, par exemple trois récepteurs, comme représenté à la figure 1, les instructions concernant les récepteurs à deux tâches 4 et 5 sont désignées par 45′ à 48′, respectivement 45˝ à 48˝.

Le diagramme de la figure 3 comprend en outre des instructions 49, 50, 49′, 50′, se rapportant au cas où l'installation comporte deux récepteurs à une seule tâche en plus des trois récepteurs à deux tâches 3, 4 et 5. Les instructions 49 et 49′ testent si l'heure courante est égale à une heure de programmation et dans l'affirmative les instructions 50 et 50′ mettent les flags correspondants à 1. Pour chaque récepteur supplémentaire il est prévu dans la mémoire volatile 17 deux flags par récepteur à deux tâches et un flag par récepteur à une tâche.

On décrira maintenant le fonctionnement du dispositif. La tension en S2 de la borne de sortie du détecteur de présence de secteur 11 est égale à la tension à sa borne d'entrée E1 diminuée de la tension entre les bornes de la diode Zener DZ2. En présence de l'alimentation secteur, la tension en S2 reste à un niveau suffisant pour que l'unité logique de traitement détecte un état 1 sur E2. Lorsque la tension de l'alimentation secteur chute en dessous d'une certaine valeur, la tension en S2 descend à un niveau tel que l'unité logique de traitement détecte un niveau 0 sur E2. Le circuit 11 est réalisé de telle sorte que la tension en E3 soit encore suffisante au fonctionnement correct de l'unité logique de traitement 14 lorsqu'un niveau 0 est détecté en E2. Le passage à l'état 1 de la sortie S3 de l'unité logique de traitement 14 provoque le blocage du transistor T4 et aucun courant ne peut circuler entre E8 et S7. La pile 13 reste ainsi isolée du circuit.

Le passage à 0 en S3 provoque par contre la saturation du transistor T4 et permet la conduction entre E8 et S7. La pile débite à travers le transistor.

Le fonctionnement général du dispositif de commande sera décrit dans le cas d'un récepteur à deux tâches inverses montée/descente.

Lorsque l'alimentation secteur est présente, l'ULT (unité logique de traitement) 14 détecte un 1 sur E2. Le programme courant s'exécute, maintenant à 1 la sortie S3, scrutant les entrées des commandes, autorisant la programmation des tâches et de l'heure courante, incrémentant l'heure courante, comparant cette dernière aux heures programmées des tâches montée, descente à exécuter, activant les sorties S4 de l'ULT selon l'état des entrées et des tâches programmées exécutables.

Dans le cas où la tension de l'alimentation secteur descend en dessous du seuil déterminé par le détecteur de présence secteur 11, un état 0 est détecté en E2. Cet état 0 provoque l'interruption du programme courant et le déroulement du programme d'interruption dont l'organigramme est représenté à la figure 3.

Dans ce diagramme, les instructions 31, 32 et 33 sont les instructions d'initialisation du programme d'interruption.

L'instruction 31 fait passer à 0 la sortie S3 de l'ULT 14 qui active le circuit 12 de mise en circuit de la pile 13 maintenant l'ULT 14 en état de fonctionnant.

Les instructions 32 et 33 provoquent successivement l'initialisation du compteur 19 à la valeur contenue dans la mémoire non volatile 16 et la mise à 0 des flags 21.

Les instructions 34 et 35 provoquent une attente de temporisation et l'incrémentation de l'horloge interne 18.

L'instruction 45 teste si l'heure courante est égale à une heure de programmation d'une tâche descente et, dans l'affirmative, l'instruction 47 met à 1 le flag correspondant à la tâche descente et à 0 le flag correspondant à la tâche montée.

L'instruction 46 teste si l'heure courante est égale à une heure de programmation d'une tâche montée et, dans l'affirmative, l'instruction 48 met à 1 le flag correspondant à la tâche montée et à 0 le flag correspondant à la tâche descente.

Les instructions 36 et 37 provoquent successivement le maintien en mémoire des tâches à exécuter et la décrémentation du compteur 19. L'instruction 38 teste le retour de l'alimentation secteur, en scrutant E2, et, dans la négative, appelle l'instruction 39 ou, dans le cas contraire, l'instruction 41.

L'instruction 39 teste l'état 0 du compteur 19 et dans la négative appelle l'instruction 34 ou, dans le cas contraire, l'instruction 40.

L'instruction 40 met à 1 la sortie S3, ce qui provoque la mise hors circuit de la pile 13. L'ULT 14 n'est plus alimentée, la mémorisation des tâches s'efface et le programme s'arrête. Seul un retour de l'alimentation secteur permettra au programme courant de redémarrer, mais dans ce cas plus aucune tâche ne sera exécutée tant que l'utilisateur n'aura pas reprogrammé le dispositif.

Ainsi la pile 13 est préservée des longues interruptions et aucun ordre facheux ne peut être exécuté.

Dans le cas où l'instruction 38 détecte en scrutant E2 le retour secteur avant la fin du décomptage, l'instruction 41 met la sortie S3 à 1, mettant la pile 13 hors circuit; l'ULT 14 est alors alimentée par le secteur.

L'instruction 42 teste si les tâches programmées n'ont pas été altérées pendant l'interruption de l'alimentation secteur. Dans l'affirmative, l'instruction 43 lit l'état des flags 21 et fait exécuter la tâche correspondante. Dans la négative, l'instruction 44 met les mémoires 16 et 17 dans leur état neutre évitant, ainsi l'exécution de tâches non souhaitées. Dans les deux cas le programme courant est ensuite rétabli comme indiqué en 53.

La pile 13 ne s'usant que modérément à chaque interruption, il est possible de la brancher à demeure, par exemple en la soudant sur le dispositif, sa capacité lui permettant d'assurer la relève des interruptions ou insuffisances de l'alimentation secteur susceptibles d'intervenir pendant toute la durée de vie du produit sur lequel est monté le dispositif de commande.

Lorsque le dispositif de commande commande plusieurs récepteur à deux tâches, le programme d'interruption exécute, pour chacun des récepteurs, des instructions 45′, 45˝..., 46′, 46˝..., 47′, 47˝..., 48′, 48˝..., respectivement analogue aux instructions 45, 46, 47 et 48.

Si l'installation comporte en outre des récepteurs à une seule tâche, par exemple deux récepteurs à une tâche, le programme d'interruption décrit des instructions correspondantes 49 et 49′ qui testent si l'heure courante est égale à une heure de programmation et, dans l'affirmative, les instructions 50 et 50′ mettent les flags 21 correspondants à 1. Pour chaque récepteur supplémentaire il est prévu dans la mémoire 17 deux flags par récepteur à deux tâches et un flag par récepteur à une tâche.

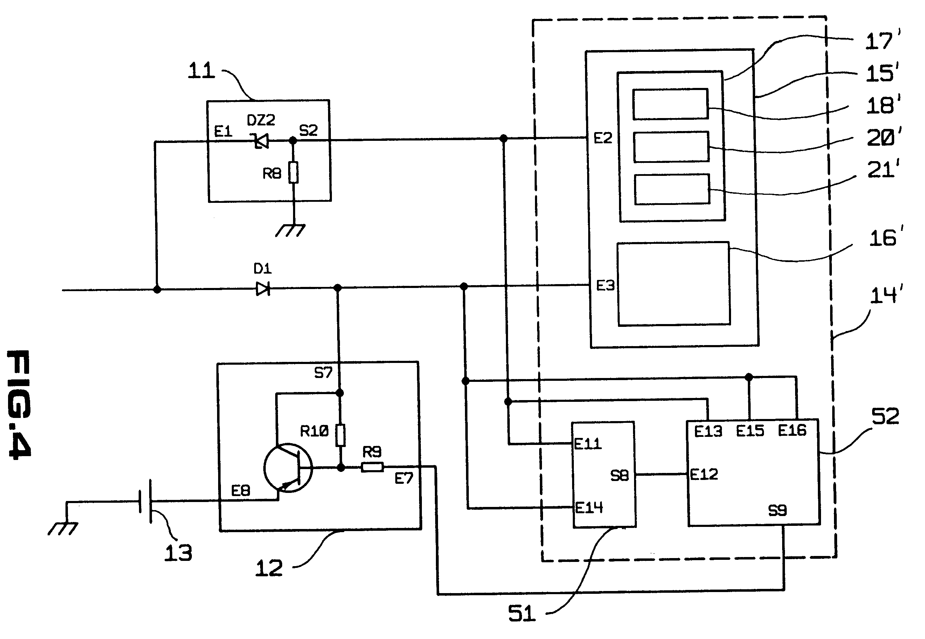

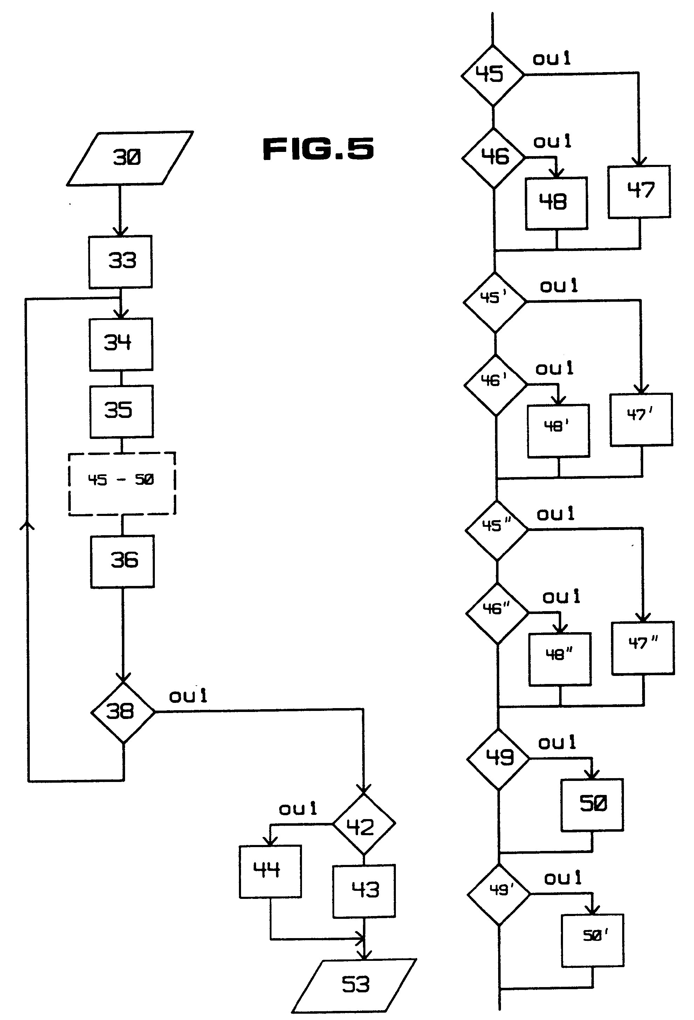

Un deuxième mode d'exécution de l'unité logique de traitement sera décrite en relation avec les figures 4 et 5. Cette ULT 14′ est constituée d'un microprocesseur 15′ plus simple que le microprocesseur 15. La mémoire volatile 17′ de ce microprocesseur 15′ comprend une horloge 18′, des cases mémoires 20′ pour contenir les heures auxquelles les tâches devront être exécutées et des flags 21′, mais pas de compteur. Le microprocesseur 15′ comprend en outre une mémoire non volatile 16′ analogue à la mémoire 16, mais dans laquelle la valeur d'initialisation du compteur a été supprimée. L'ULT 14′ est complétée par un multivibrateur de type astable 51 et un compteur 52 de type synchrone. Le multivibrateur 51 comporte deux entrées E11 et E14 reliées respectivement à la sortie S2 du détecteur de présence secteur 11 et à la sortie de la diode D1. Il comporte également une sortie S8. Le compteur 52 comporte des entrées E12, E13 et E15 reliées respectivement à S8, à la sortie S2 du détecteur de présence secteur 11 et à la sortie de la diode D1. Le compteur comporte en outre une série d'entrées E16 de présélection du compteur 52 et une sortie S9 (exécution) reliée à l'entrée E7 du dispositif 12 de mise en circuit de la pile 13.

Le dispositif fonctionne de la manière suivante :

Le multivibrateur 51 est prévu pour détecter un 0 en E11 lorsque la tension en S2 passe sous un certain seuil et, dans ce cas, pour délivrer en S8 des impulsions et, dans le cas contraire, laisser S8 à 0. Le compteur 52 est prévu pour détecter un 0 en E13 lorsque la tension en S2 passe sous un certain seuil et, dans ce cas, délivrer un 0 en S9 et se charger de la valeur présente sur les entrées de préselection. Le compteur 52 est également prévu pour se décrémenter d'une unité à chaque impulsion du multivibrateur 51 appliquée en E12 et, lorsque celui-ci est arrivé à 0, faire passer à 1 la sortie S9.

Lorsque l'alimentation secteur est présente, un état 1 est présent en E11. La sortie S8 du multivibrateur 51 reste à 0 ainsi que l'entrée E12 du compteur 52. La sortie S9 du compteur 52 reste à 1 et la pile 13 reste isolée du circuit. Lorsque la tension de l'alimentation secteur descend sous le seuil déterminé par le détecteur de présence secteur 11, un 0 est simultanément détecté en E2, E11 et E13.

Le passage à 0 de E2 provoque de manière analogue au premier mode d'exécution l'interruption du programme courant et le déroulement du programme d'interruption dont le diagramme est représenté à la figure 5.

Le passage à 0 de E13 provoque la mise à 0 de la sortie S9 du compteur 52 sortie qui actionne le dispositif 12 de mise en circuit de la pile 13. Le passage à 0 de E11 déclenche les impulsions sur la sortie S8 du multivibrateur 51, impulsions qui sont appliquées à l'entrée E12 du compteur 52 qui est décrémenté par ces impulsions.

Comparé au programme d'interruption représenté à la figure 3, le programme d'interruption représenté à la figure 5, pour ce deuxième mode d'exécution, ne comporte plus les instructions 31, 32, 39, 40 et 41, qui sont remplacées par le multivibrateur 51 et le compteur 52. Les autres instructions subsistent et ont été désignées par les mêmes références. Les instructions 33, 34, 35, 45, 46, 47, 48 et 36 se déroulent comme dans le premier mode d'exécution. Il en est de même, le cas échéant, des instructions 45′, 45˝, 46′, 46˝, 47′, 47˝, 48′, 48˝, 49, 49′, 50, 50′.

L'instruction 38 teste le retour de l'alimentation secteur et, dans la négative, appelle l'instruction 34, et, dans le cas contraire, l'instruction 42. L'instruction 42 se déroule comme dans le premier mode d'exécution, conduisant à l'exécution des tâches par l'intermédiaire de l'instruction 43 ou au retour des mémoires 16′ et 17′ à leur état neutre par l'intermédiaire de son instruction 44, puis au retour du programme courant.

Dans le même temps, les entrées E11 et E13 passent à l'état 1. Le passage à 1 en E11 provoque l'arrêt des impulsions en S8, c,est-à-dire l'arrêt du compteur 52.

Le passage à 1 en E13 provoque la réinitialisation du compteur 52 et le passage à 1 de la sortie S9 et par conséquent la mise hors circuit de la pile 13.

Dans le cas où le compteur 52 arrive à 0 avant que l'alimentation secteur ne soit redevenue normale, la sortie S9 passe à 1 et la pile 13 est mise hors circuit.

Selon une variante d'exécution plus simple, les tâches qui auraient du être exécutées pendant l'interruption pourraient ne pas être exécutés lors du retour de l'alimentations secteur avant la fin du décomptage.

## Revendications

1. Dispositif électronique de commande d'au moins un récepteur électrique (3, 4, 5), comprenant une unité logique de traitement (14) prévue pour mémoriser des tâches à exécuter par le récepteur et alimentée d'une part par le secteur (P, N) et d'autre part par une pile (13) destinée à remplacer le secteur en cas de défaillance de celui-ci, et des moyens (11, 12) pour substituer l'alimentation de la pile à celle du secteur lorsque la tension du secteur descend en dessous d'un niveau déterminé, ces moyens comprenant des moyens (11) détectant une chute de tension du secteur et des moyens (12) de mise en circuit de la pile, l'unité logique de traitement (14) comprenant un compteur de temps (19; 52) initialisé et décrémenté simultanément à l'envoi d'un ordre de mise en circuit de la pile et étant en outre prévue pour tester périodiquement les moyens de détection d'une chute de tension (11) et délivrer un ordre en fin de décrémentation du compteur si la tension d'alimentation secteur n'est pas revenue à son niveau déterminé, caractérisé en ce que l'ordre délivré est un ordre de mise hors circuit de la pile.

2. Dispositif de commande selon la revendication 1, caractérisé en ce que l'unité logique de traitement (14) est en outre prévue, en cas de retour à la normale de l'alimentation secteur avant la fin de la décrémentation du compteur, pour tester si les tâches mémorisées (20) ont été affectées pendant l'insuffisance d'alimentation secteur et, dans la négative, faire exécuter les dernières tâches mémorisées qui auraient dues être exécutées pendant cette période ou, dans le cas contraire, mettre les mémoires (16, 17) dans leur état neutre.

3. Dispositif de commande selon l'une des revendications 1 ou 2, caractérisé en ce que l'unité logique de traitement (14) comprend un microprocesseur (15) comprenant dans sa mémoire non volatile (16) un programme courant, un programme d'interruption et une valeur d'initialisation du compteur, ainsi qu'une mémoire volatile comportant une horloge (18), un compteur (19), des cases mémoires (20) pour contenir les heures auxquelles les tâches devront être exécutées et des flags (21) pour contenir les états correspondant aux tâches qui seraient à exécuter si l'alimentation du secteur revenait à l'instant présent, le programme courant comportant des instructions de scrutation des entrées, d'autorisation de la programmation de l'heure des tâches et de l'heure courante, d'incrémentation de l'heure courante, de comparaison de l'heure courante aux heures des tâches à exécuter et d'activation des sorties de l'unité logique de traitement (14), le programme d'interruption comprenant les instructions nécessaires à l'initialisation et à la décrémentation du compteur, à l'incrémentation de l'horloge interne de l'unité logique de traitement, au maintien en mémoire des tâches à exécuter, aux divers tests à effectuer, à la mise à 0 ou 1 des flags et à leur lecture.

4. Dispositif de commande selon l'une des revendications 1 ou 2, caractérisé en ce que l'unité logique de traitement (14′) comprend un microprocesseur (15′) comprenant une mémoire non volatile (16′) comprenant un programme courant et un programme d'interruption, ainsi qu'une mémoire volatile (17′) comportant une horloge (18′) des cases mémoires (20′) pour contenir les heures auxquelles les tâches devront être exécutées, et des flags (21′) pour contenir des états correspondant aux taches qui seraient à exécuter si l'alimentation du secteur revenait à l'instant présent, un compteur (52) distinct du microprocesseur et un multivibrateur instable (51) commandé par lesdits moyens de détection d'une chute de tension (11) pour décrémenter le compteur.

5. Dispositif de commande selon l'une des revendications 1 à 4, caractérisé en ce que les moyens pour détecter une chute de tension du secteur (11) sont constitués d'une diode Zener (DZ2) associée à une résistance de polarisation (R8).

6. Dispositif de commande selon l'une des revendications 1 à 4, caractérisé en que les moyens (12) de mise en circuit de la pile sont constitués d'un transistor (T4) fonctionnant en interrupteur.

## Patentansprüche

1. Elektronische Steuervorrichtung für wenigstens einen elektrischen Verbraucher (3, 4, 5) mit einer logischen Verarbeitungseinheit (14), die zum Speichern der vom Verbraucher auszuführenden Aufgaben vorgesehen ist und einerseits durch das Leitungsnetz (P, N) und andererseits durch eine Batterie (13) gespeist wird, die dazu bestimmt ist, das Netz im Falle eines Netzausfalls zu ersetzen, und mit Mitteln (11, 12), um die Netzspeisung durch die Batteriespeisung zu ersetzen, wenn die Netzspannung unter ein bestimmtes Niveau absinkt, wobei diese Mittel Mittel (11), die einen Abfall der Netzspannung erfassen, und Mittel (12) zum Zuschalten der Batterie aufweisen und wobei die logische Verarbeitungseinheit (14) einen Zeitzähler (19; 52) aufweist, der gleichzeitig mit der Uebermittlung eines Befehls zum Zuschalten der Batterie initialisiert und dekrementiert wird und der ausserdem dazu vorgesehen ist, die Mittel (11) zum Erfassen eines Spannungsabfalls periodisch zu prüfen und einen Befehl zum Dekrementieren des Zählers abzugeben, wenn die Netzspeisespannung nicht auf ihr bestimmtes Niveau zurückgekehrt ist, dadurch gekennzeichnet, dass der abgegebene Befehl ein Befehl zum Abschalten der Batterie ist.

2. Steuervorrichtung nach Anspruch 1, dadurch gekennzeichnet, dass die logische Verarbeitungseinheit (14) ausserdem dazu vorgesehen ist, im Falle, dass die Netzspeisung vor dem Ende des Dekrementierens des Zählers zum normalen Zustand zurückkehrt, zu prüfen, ob die gespeicherten Aufgaben (20) während des Ausfalls der Netzspeisung beeinträchtigt worden sind und im negativen Falle die Ausführung der letzten gespeicherten Aufgaben zu bewirken, welche während dieser Periode hätten ausgeführt werden müssen, oder im entgegengesetzten Falle die Speicher (16, 17) in ihren neutralen Zustand zu versetzen.

3. Steuereinheit nach einem der Ansprüche 1 oder 2, dadurch gekennzeichnet, dass die logische Verarbeitungseinheit (14) einen Mikroprozessor (15) aufweist, der in seinem nicht flüchtigen Speicher (16) ein laufendes Programm, ein Unterbrechungsprogramm und einen Initialisierungswert für den Zähler hält, und der einen flüchtigen Speicher mit einem Taktgeber (18), mit einem Zähler (19), mit Speicherplätzen (20) zur Aufnahme der Zeiten, an denen die Aufgaben ausgeführt werden müssen, und mit Flags (21) aufweist, um die Zustände zu halten, die den Aufgaben entsprechen, welche auszuführen wären, wenn die Netzspeisung zum gegenwärtigen Zeitpunkt zurückkehrte, wobei das laufende Programm Befehle zum Abfragen der Eingänge, zur Genehmigung der Programmierung der Zeit der Aufgaben und der laufenden Zeit, zum Dekrementieren der laufenden Zeit, zum Vergleich der laufenden Zeit mit den Zeiten der auszuführenden Aufgaben und zur Aktivierung der Ausgänge der logischen Verarbeitungseinheit (14) aufweist und wobei das Unterbrechungsprogramm die notwendigen Instruktionen zum Initialisieren und zum Dekrementieren des Zählers, zum Inkrementieren des internen Taktgebers der logischen Verarbeitungseinheit, zum Halten der auszuführenden Aufgaben im Speicher, zum Ausführen verschiedener Tests, zum Einstellung der Flags auf 0 oder 1 und zum Lesen derselben aufweist.

4. Steuereinheit nach einem der Ansprüche 1 oder 2, dadurch gekennzeichnet, dass die logische Verarbeitungseinheit (14′) einen Mikroprozessor (15′) mit einem nicht flüchtigen Speicher (16′), der ein laufendes Programm und ein Unterbrechungsprogramm hat, sowie mit einem flüchtigen Speicher (17′), der einen Taktgeber (18′), Speicherplätze (20′) zum Halten der Zeiten, an denen die Aufgaben ausgeführt werden müssen, und Flags (21′) zum Halten der Zustände hat, die den Aufgaben entsprechen, welche ausgeführt würden, wenn die Netzspeisung zum gegenwärtigen Zeitpunkt zurückkehrt, ferner einen vom Mikroprozessor getrennten Zähler (52) und einen instabilen Multivibrator (51) aufweist, der von den erwähnten Mitteln zum Erfassen eines Spannungsabfalls (11) gesteuert wird, um den Zähler zu dekrementieren.

5. Steuervorrichtung nach einem der Ansprüche 1 bis 4, dadurch gekennzeichnet, dass die Mittel zum Erfassen eines Spannungsabfalls des Netzes (11) aus einer Zener-Diode (DZ2) bestehen, die mit einem Polarisationswiderstand (R8) verbunden ist.

6. Steuervorrichtung nach einem der Ansprüche 1 bis 4, dadurch gekennzeichnet, dass die Mittel (12) zum Zuschalten der Batterie aus einem als Schalter arbeitenden Transistor (T4) bestehen.

## Claims

1. Electronic control device for at least one electrical receiver (3, 4, 5), comprising a logic processing unit (14) provided to store tasks to be executed by the receiver and supplied, on the one hand, by the mains (P, N) and, on the other hand, by a battery (13) intended to replace the mains in the event of failure of the latter, and means (11, 12) to substitute the supply from the battery for the supply from the mains when the voltage of the mains drops below a specific level, these means comprising means (11) detecting a fall in voltage of the mains and means (12) for connecting the battery in circuit, the logic processing unit (14) comprising a beat counter (19; 52) initialized and decremented simultaneously with the despatching of anorderforconnecting the battery in circuit and being further provided to test periodically the means of detection of a fall in voltage (11) and to deliver an order at the end of decrementation of the counter if the mains supply voltage has not returned to its specific level, characterized in that the order which is delivered is an order for disconnecting the battery from the circuit.

2. Control device according to Claim 1, characterized in that the logic processing unit (14) is further provided, in the event that the mains supply returns to normal before the end of the decrementation of the counter, to test whether the stored tasks (20) have been affected during the shortfall in mains supply and, if FALSE, to cause execution of the latest stored tasks which should have been executed during this period, or, if TRUE, to place the memories (16, 17) in their neutral state.

3. Control device according to either of Claims 1 or 2, characterized in that the logic processing unit (14) comprises a microprocessor (15), comprising in its nonvolatile memory (16) a current program, an interrupt program and an initialization value of the counter, as well as a volatile memory including a clock (18), a counter (19), memory locations (20) to hold the times at which the tasks should be executed and flags (21) to hold the states corresponding to the tasks which would be executed if the supply of the mains were to return at the present instant, the current program including instructions for scanning of inputs, for authorization of the programming of the time of the tasks and of the current time, for incrementation of the current time, for comparison of the current time with the times of the tasks to be executed and, for activation of the outputs of the logic processing unit (14), the interrupt program comprising the necessary instructions for the initialization and for the decrementation of the counter, the incrementation of the internal clock of the logic processing unit, the retention in memory of the tasks to be executed, the various tests to be carried out, the setting to 0 or 1 of the flags and their reading.

4. Control device according to either of Claims 1 or 2, characterized in that the logic processing unit (14′) comprises a microprocessor (15′) comprising a nonvolatile memory (16′) comprising a current program and an interrupt program, as well as a volatile memory (17′) including a clock (18′), memory locations (20′) to hold the times at which the tasks should be executed, and flags (21′) to hold states corresponding to the tasks which would be executed if the supply of the mains were to return at the present instant, a counter (52) distinct from the microprocessor and an unstable multivibrator (51), controlled by the said means of detection of a fall in voltage (11), to decrement the counter.

5. Control device according to one of Claims 1 to 4, characterized in that the means for detecting a fall in voltage of the mains (11) consist of a Zener diode (DZ2) connected to a polarization resistance (R8).

6. Control device according to one of Claims 1 to 4, characterized in that the means (12) of connecting the battery in circuit consist of a transistor (T4) operating as a circuit breaker.
